# EUROPEAN PATENT APPLICATION

(11) **EP 4 832 177 A1**
(43) Date of publication of application: **28.10.2026**
(21) Application number: 25768535.4
(22) Date of filing: 26.02.2025
(51) Int. Cl.: H01M 10/6567, H01M 50/383, H01M 50/30, H01M 10/04, H01M 50/375, H01M 50/342, H01M 10/613, H01M 10/6568

(54) **BATTERY MODULE AND BATTERY PACK INCLUDING SAME**

(30) Priority: 06.03.2024 KR 20240032007
(71) Applicant: LG Energy Solution, Ltd., Seoul 07335 (KR)
(72) Inventor: JANG, Cheol Han, Daejeon 34122 (KR); KIM, Dooseung, Daejeon 34122 (KR)
(74) Representative: Plasseraud IP
(86) International application number: PCT/KR2025/002649
(87) International publication number: WO 2025/188011

(57) **Abstract**

A battery module according to certain embodiments of the present disclosure includes: a battery cell stack in which a plurality of battery cells are stacked, a module frame that houses the battery cell stack, an inlet port through which a coolant flows into the module frame, an outlet port through which the coolant flows out of the module frame, and an expansion member which is disposed respectively within the inlet port and the outlet port and expands in its volume when a prescribed temperature is reached.

## Description

### [TECHNICAL FIELD]

### Cross-Reference to Related Application(s)

This application claims priority to and the benefit of Korean Patent Application No. 10-2024-0032007, filed on March 6, 2024, with the Korean Intellection Property Office, the contents of which are incorporated herein by reference in its entirety.

The present disclosure relates to a battery module and a battery pack including the same, and more particularly, to a battery module that can not only improve cooling efficiency and thus enhance cooling performance, but also prevent propagation of a vent gas emitted due to a thermal runaway phenomenon that occurs in the battery module, to adjacent battery modules, and a battery pack including the same.

### [BACKGROUND ART]

As mobile devices have been increasingly developed, and the demand for such mobile devices has increased, the demand for secondary batteries as energy sources is also rapidly increasing. Accordingly, much research on secondary batteries satisfying various needs has been carried out.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked, and a battery pack equipped with such battery modules can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery module can easily propagate to an adjacent battery module, which may eventually lead to ignition or explosion of the battery pack itself.

Furthermore, since the battery pack consists of a structure in which a plurality of battery modules are combined, it is heavy and unsuitable for loading a plurality of batteries into a means of transportation such as an automobile, and therefore it is necessary to improve the energy density.

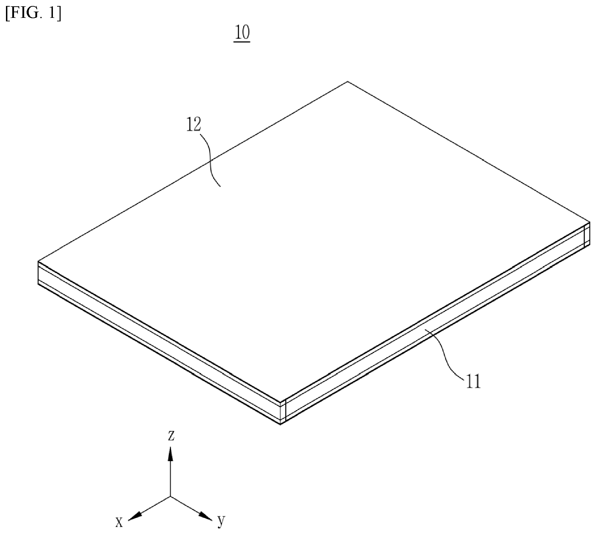

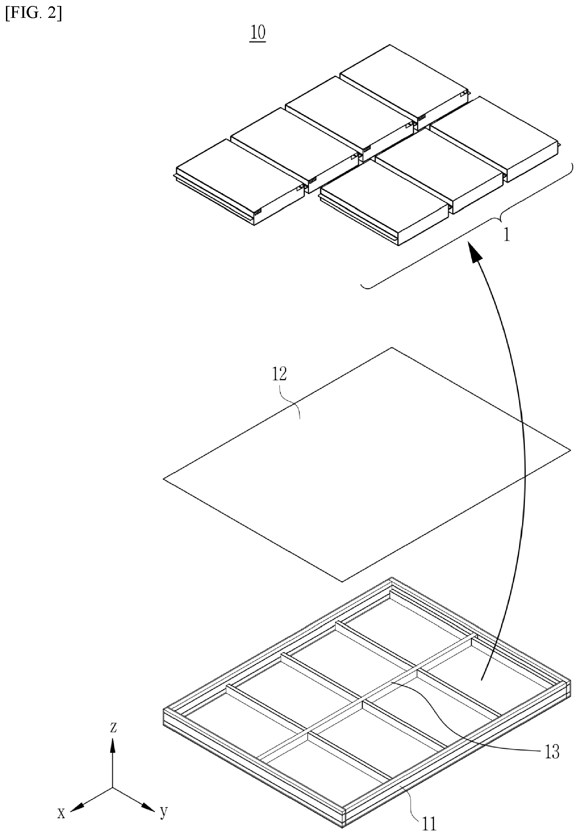

FIG. 1 is a perspective view showing a conventional battery pack. FIG. 2 is an exploded perspective view of the battery pack of FIG. 1.

Referring to FIGS. 1 and 2, a conventional battery pack 10 includes a lower pack frame 11 on which a plurality of battery modules 1 are mounted, an upper pack frame 12 located in an upper part of the battery modules 1, and an internal beam 13 that partitions the position where the battery modules 1 are mounted within the battery pack 10.

In this way, when a battery module 1 is mounted in a battery pack 10, the energy density of the battery pack 10 decreases due to the internal beam 13 that partitions between the battery modules 1, which causes a problem that more battery packs 10 must be provided in order to satisfy the efficiency required for the device or the like. Furthermore, due to the weight of the battery pack 10, there is a limit to the number of battery packs 10 that can be provided in a device. Therefore, in order to reduce the weight of the battery pack 10 and at the same time, increase the energy density of the battery pack 10, there is a need to mount more battery modules 1 in the battery pack 10.

As shown in FIGS. 1 and 2, the conventional battery pack 10 has a form wherein a plurality of battery modules 1 are housed. Therefore, in the case where a thermal runaway phenomenon occurs in any one of the plurality of battery modules 1, there is a need to develop a structure, a method or the like that can prevent the vent gas generated in the battery module 1 in which the thermal runaway phenomenon occurs from propagating to other battery modules 1 and causing the thermal runaway phenomenon to propagate to other battery modules 1.

In addition, since the conventional battery module 1 and battery pack 10 do not directly cool the battery cell stack provided in the battery module 1, there is a need to develop more effective methods for improving cooling efficiency.

### [DETAILED DESCRIPTION OF THE INVENTION]

### [Technical Problem]

Therefore, it is an object of the present disclosure to provide a battery module that can not only improve cooling efficiency of the battery module and thus enhance cooling performance, but also prevent propagation of a vent gas emitted due to a thermal runaway phenomenon that occurs in the battery module, to adjacent battery modules, and a battery pack including the same.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery module comprising: a battery cell stack in which a plurality of battery cells are stacked, a module frame that houses the battery cell stack, an inlet port through which a coolant flows into the module frame, an outlet port through which the coolant flows out of the module frame, and an expansion member which is disposed respectively within the inlet port and the outlet port and expands in its volume when a prescribed temperature is reached.

The battery module further comprises an end plate that closes opened both sides of the module frame, and includes a coolant opening formed to allow the coolant to flow in or out, wherein the expansion member may expand so as to close the coolant opening when the prescribed temperature is reached.

The inlet port may be formed in the end plate disposed on any one of both surfaces of the module frame, and the outlet port may be formed in the end plate disposed on the other of both surfaces of the module frame.

An upper end of the coolant opening may be located higher than a center on the basis of a height of the battery cell stack, and a lower end of the coolant opening may be located lower than the center on the basis of the height of the battery cell stack.

A length from the upper end to the lower end of the coolant opening may be between 0.5 and 0.9 times a length from an upper edge to a lower edge of the end plate.

The expansion member may comprise a main body part formed to surround a periphery of the coolant opening, and a through hole formed to allow the coolant to flow in or out.

The main body part may be formed to be inclined so that its cross-sectional area decreases as going away from the coolant opening.

The main body part may comprise a plurality of micro holes formed to allow the coolant to penetrate into the expansion member.

Each of the inlet port and the outlet port comprises a cover member formed to be inclined downward on a surface facing the coolant opening, and the inlet port and the outlet port may decrease in cross-sectional area as they go from the upper side to the lower side.

The expansion member may expand toward an internal space of the inlet port and the outlet port during expansion to close the coolant opening.

The expansion member may comprise a foamed layer that expands in volume when it reaches a first temperature, and a chemical resistant layer that is laminated on both surfaces of the foamed layer and softened at a second temperature lower than the first temperature.

The chemical resistant layer may thermally decompose at a third temperature higher than the second temperature.

The third temperature may be higher than or equal to the first temperature.

The foamed layer may comprise at least one of a silica gel, a foamed silicone pad, a polyurethane foam, and a polypropylene.

The chemical resistant layer may comprise at least one of PVC, PET, Nylon, PFA, PVDF and PTFE.

The module frame may comprise at least one venting part formed at an upper end thereof to discharge internal gas.

The venting part may comprise a venting hole which is able to be opened so as to discharge internal gas, and an opening that closes the venting hole when a pressure or temperature inside the module frame is below a prescribed internal pressure or a prescribed internal temperature, and opens the venting hole when the pressure or temperature inside the module frame reaches the prescribed internal pressure or the prescribed internal temperature.

The opening may comprise a rupture member that ruptures when the prescribed internal pressure is reached or thermally decomposes when the prescribed internal temperature is reached.

The coolant may comprise an insulating coolant or a nonflammable coolant.

According to certain other aspects of the present disclosure, there is provided a battery pack comprising a plurality of battery modules according to the above-mentioned embodiments, wherein the battery pack comprises a coolant line connected to the inlet port and the outlet port, respectively, and the expansion member may close the inlet port and the outlet port when a prescribed temperature is reached, thereby blocking the coolant from flowing into the coolant line.

### [Advantageous Effects]

A battery module and a battery pack including the same according to certain embodiments of the present disclosure can increase the cooling efficiency through direct cooling of the coolant to the battery cell, thereby increasing the energy density.

In addition, since the vent gas emitted due to a thermal runaway phenomenon that occurs in the battery module can be prevented from propagating to an adjacent battery module, it is possible to improve the stability of the battery module and the battery pack including the same even if a specific situation such as the thermal runaway phenomenon occurs.

Furthermore, when a thermal runaway phenomenon occurs, the cooling effect due to the coolant can be maintained for a longer period of time, thereby further improving the stability of the battery module and the battery pack including the same.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a conventional battery pack.
FIG. 2 is an exploded perspective view of the battery pack of FIG. 1.
FIG. 3 is a perspective view showing a battery module according to certain embodiments of the present disclosure.
FIG. 4 is an exploded perspective view of the battery module of FIG. 3.
FIG. 5 is a plan view showing one of the battery cells included in the battery cell stack of FIG. 4.
FIG. 6 is a view of the battery module of FIG. 3 as viewed along the -x-axis direction on the yz plane.
FIG. 7 is a view of the inlet port as viewed along the -y-axis direction on the xz plane.
FIG. 8 is a front view of the expansion member.
FIG. 9(a) is a diagram showing the expansion member before being expanded in the inlet port, and FIG. 9(b) is a diagram showing the expansion member after being expanded in the inlet port.
FIG. 10 is a cross-sectional view of the expansion member.
FIG. 11 is a conceptual diagram for explaining the operation of the venting part.
FIG. 12 is a perspective view of a battery pack including a battery module according to certain embodiments of the present disclosure.
FIG. 13 is an exploded perspective view of the battery pack shown in FIG. 12.
FIG. 14 is a conceptual diagram for explaining the positions at which the expansion member is disposed in the battery pack.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

In the embodiments above, expressions indicating directions such as "front," "rear," "left," "right," "up," and "down" have been used. These expressions are used only to facilitate the description, and may vary, for example, depending on the location of a target object or an observer.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, specific embodiments of the present disclosure will be described.

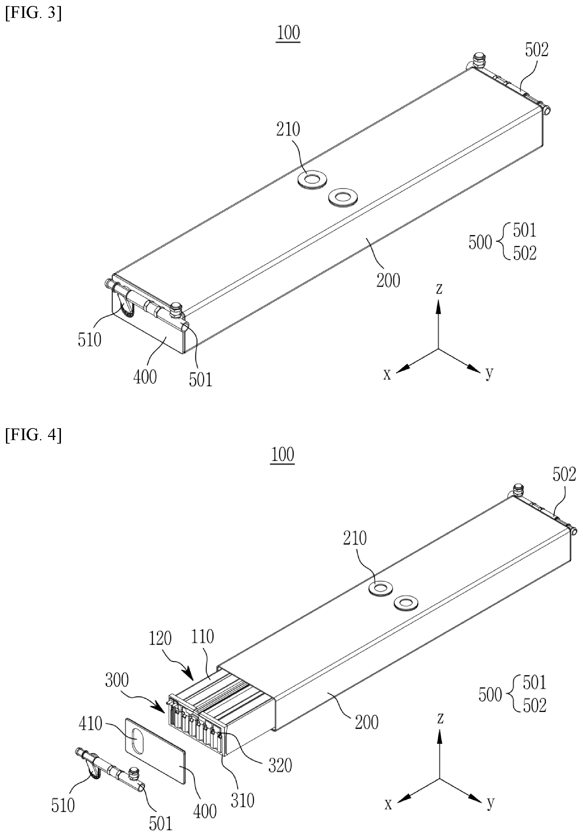

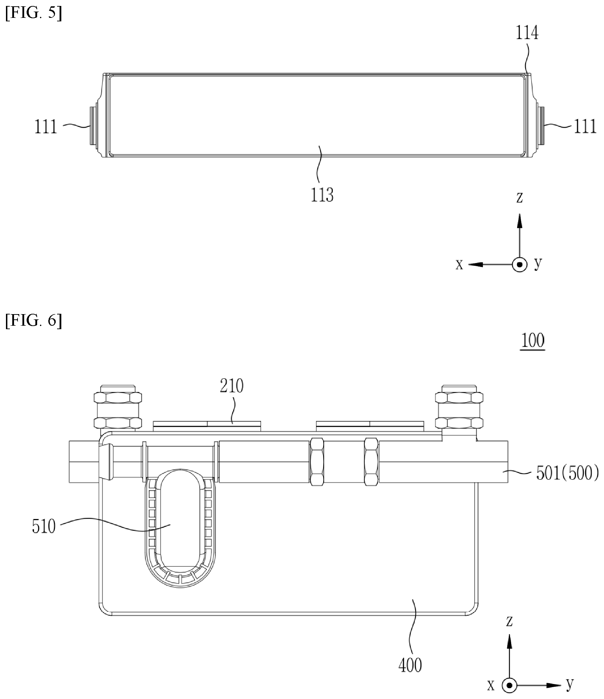

FIG. 3 is a perspective view showing a battery module according to certain embodiments of the present disclosure. FIG. 4 is an exploded perspective view of the battery module of FIG. 3. FIG. 5 is a plan view showing one of the battery cells included in the battery cell stack of FIG. 4.

Referring to FIGS. 3 to 5, a battery module 100 according to certain embodiments of the present disclosure includes a battery cell stack 120 formed by stacking a plurality of battery cells 110, a module frame 200 that houses the battery cell stack 120, an end plate 400 that closes opened both surfaces of the module frame 200, an inlet port 510 that is formed on an end plate 400 disposed on any one of both surfaces of the module frame 200 so that a coolant can flow into the inside of the module frame 200, an outlet port 516 that is formed on an end plate 400 disposed on the other of both surfaces of the module frame 200 so that a coolant can flow out from the inside of the module frame 200, and expansion members 520 that are disposed respectively at the inlet port 510 and the outlet port 516 and expand in volume when a prescribed temperature is reached.

First, the battery cell 110 may be a pouch-shaped battery in which an electrode assembly having electrode leads 111 protruding in one direction or both directions is housed in a pouch case 114. However, this is only one example, and a battery cell according to certain other embodiments of the present disclosure may be a prismatic battery. For convenience of explanation, a battery cell 110 which is a pouch-shaped battery will be mainly described below.

The battery cells 110 may have a rectangular sheet shape. The battery cell 110 may be formed by housing an electrode assembly in a pouch case 114 made of a laminate sheet including a resin layer and a metal layer, and then adhering the outer peripheral side of the pouch case 114. In one embodiment, the battery cell 110 may have a structure in which two electrode leads 111 face each other and protrude from one end and the other end of the cell main body 113. In another embodiment, a structure in which all the electrode leads 111 of the battery cells 110 protrude in one direction is also possible. One of the electrode leads 111 is a positive electrode lead, and the other is a negative electrode lead.

The battery cell 110 may be produced by adhering the peripheral part of the pouch case 114 in a state in which the electrode assembly (not shown) is housed in the pouch case 114. In another embodiment, the battery cell 110 may be configured such that in a state where one side of the pouch case 114 is folded, the electrode assembly is housed and the remaining sides are sealed.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate (PET) resin or a nylon resin. The metal layer can prevent air, moisture, and the like from flowing into the inside of the pouch-type secondary battery. This metal layer may include aluminum (Al). The inner resin layers may be thermally fused to each other by heat and/or pressure applied in a state in which the electrode assembly is embedded. This inner resin layer may include casted polypropylene (CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be bonded to each other, so that the pouch case 114 is sealed. Thereby, the battery cell 110, which is a pouch-type secondary battery, can be produced.

The battery cells 110 may be configured in a plurality of numbers, and the plurality of battery cells 110 may be stacked so as to be electrically connected to each other, thereby forming a battery cell stack 120. In particular, as shown in FIG. 4, the plurality of battery cells 110 may be stacked along a direction parallel to the y-axis while standing upright so that one-side surfaces of the cell main body 113 faces each other. Thereby, the electrode leads 111 may protrude in a direction perpendicular to the direction in which the battery cells 110 are stacked. That is, in the battery cell 110, one electrode lead 111 may protrude toward the x-axis direction, and the other electrode lead 111 may protrude toward the -x-axis direction. If battery cells have the electrode leads 111 protruding only in one direction, the electrode leads 111 may protrude in the x-axis direction or the -x-axis direction.

The module frame 200 may be intended to protect the battery cell stack 120 and the electrical components connected thereto from external physical impact. The battery cell stack 120 and the electrical components connected thereto may be housed in the internal space of the module frame 200.

The structure of the module frame 200 may have various shapes. According to certain embodiments of the present disclosure, the structure of the module frame 200 may be a mono-frame structure. Here, the mono-frame may be in the form of a metal plate in which the upper and lower surfaces (z-axis direction and -z-axis direction) and both side surfaces (y-axis direction and -y-axis direction) are integrated. The mono frame may be manufactured by extrusion molding.

However, the structure of the module frame 200 is not limited thereto, and in certain other embodiments, the module frame 200 may have a structure in which a U-shaped frame and an upper plate are coupled to each other. In this case, the U-shaped frame may have both side surface that extend upward from a lower surface and both edges of the lower surface, and the upper plate may be in a plate-like form. In this case, each frame or plate constituting the U-shaped frame may be manufactured by press molding. In addition, the structure of the module frame 200 may be provided as an L-shaped frame in addition to a mono-frame or a U-shaped frame, and may also be provided in various structures not described in the above-described embodiments.

The module frame 200 may have the form that is opened on both sides. More specifically, the module frame 200 may be provided in the form that is opened along the longitudinal direction of the battery cells 110. In this case, the front surface and rear surface of the battery cell stack 120 may not be covered by the module frame 200. The front surface and the rear surface of the battery cell stack 120 may be covered by the busbar assembly 300, the end plate 400, and the like, through which the front surface and rear surface of the battery cell stack 120 may be protected from external physical impact or the like.

The battery module 100 may include a busbar assembly 300 located on one side and the other side of the battery cell stack 120, respectively. Specifically, a busbar assembly 300 may be located respectively in both directions in which the electrode leads 111 of the battery cells 110 included in the battery cell stack 120 protrude. The busbar assembly 300 may electrically connect the battery cells 110 constituting the battery cell stack 120 in series or in parallel. The busbar assembly 300 may include a busbar frame 310, a busbar 320, and a terminal busbar, respectively.

The busbar frame 310 may be located on one surface of the battery cell stack 120 to cover one surface of the battery cell stack 120 and at the same time, guide the connection between the battery cell stack 120 and an external device. The busbar frame 310 may be located on the front surface (x-axis direction) and the rear surface (-x-axis direction) of the battery cell stack 120.

A busbar 320 may be mounted on the busbar frame 310. Specifically, the inner surface of the busbar frame 310 may be connected to the front surface (x-axis direction) and the rear surface (-x-axis direction) of the battery cell stack 120, and the outer surface of the busbar frame 310 may be connected to the busbar 320.

The busbar frame 310 may include an electrically insulating material. The busbar frame 310 may limit contact of the busbar 320 with other portions of the battery cells 110 in addition to the portion bonded with the electrode lead (not shown), thereby preventing occurrence of an electrical short circuit.

The busbar 320 may be mounted on one surface of the busbar frame 310, and may be for electrically connecting the battery cell stack 120 or the battery cells 110 to the external device circuit. The busbar 320 is located on the busbar frame 310, and the busbar assembly 300 may be covered by the end plate 400 of FIG. 4, thereby protecting from external impacts, and the like, and minimizing deterioration of the durability of the battery due to external moisture and the like.

The busbar 320 may be electrically connected to the battery cell stack 120 through the electrode lead of the battery cell 110. Specifically, the electrode lead 111 of the battery cell 110 may be bent after passing through a slit formed in the busbar frame 310 to be connected to the busbar 320. The battery cells 110 constituting the battery cell stack 120 may be connected in series or in parallel by the busbar 320. The connection method between the electrode lead 111 and the busbar 320 is not particularly limited, and weld-bonding may be applied as an example.

Meanwhile, although not shown in FIGS. 3 and 4, the battery module 100 may be provided with a terminal busbar. The terminal busbar may include a first terminal busbar and a second terminal busbar, and the first terminal busbar and the second terminal busbar may have different polarities from each other.

The terminal busbar may be electrically connected to the busbar 320 or the electrode lead to electrically connect one battery module 100 to another battery module 100. The first terminal busbar and the second terminal busbar may be at least partially exposed to the outside of the end plate 400 in order to connect one battery module 100 to another external battery module 100, and the end plate 400 may be provided with a terminal busbar opening (not shown) for this purpose. The terminal busbar may be connected to another battery module 100 or a BDU (Battery Disconnect Unit) through a portion exposed through the terminal busbar opening, and may form an HV (High voltage) connection therewith.

The end plates 400 may be located on opened both sides (x-axis direction and - x-axis direction) of the module frame 200, and formed to close the opened both sides of the module frame 200 to cover the battery cell stack 120. The end plates 400 may physically protect the battery cell stack 120 and other electrical components from external impact.

The end plate 400 may include a coolant opening 410 that is formed to allow a coolant to flow in or out. The coolant opening 410 is an opening provided in the end plate 400, and is a hole passing through the end plate 400. Thereby, even if the end plate 400 is mounted, the coolant may be flowed in from the outside to the inside of the module frame 200 or may be flowed out from the inside to the outside of the module frame 200 through the coolant opening 410. The coolant opening 410 may be covered by an inlet port 510 or an outlet port 516 described below, and connected to the first coolant line 501 or the second coolant line 502, respectively.

The coolant opening 410 may be a hole formed to extend in the up-and-down direction (z-axis direction and -z-axis direction). The upper end of the coolant opening 410 may be located higher than the center on the basis of the height of the battery cell stack 120. The lower end of the coolant opening 410 may be located lower than the center on the basis of the height of the battery cell stack 120. Specifically, the length from the center of the coolant opening 410 to the upper end of the coolant opening 410 may be greater than or equal to the length from the upper edge of the end plate 400 to the upper end of the coolant opening 410. In addition, the length from the center of the coolant opening 410 to the lower end of the coolant opening 410 may be greater than or equal to the length from the lower edge of the end plate 400 to the lower end of the coolant opening 410. More specifically, the length from the upper end to the lower end of the coolant opening 410 may be between 0.5 and 0.9 times the length from the upper edge to the lower edge of the end plate 400.

The coolant may flow directly into the inside of the module frame 200. As the coolant flows into the inside of the module frame 200, it may receive transfer of heat generated from the battery cell stack 120, the busbar assembly 300, or other electrical components housed in the module frame 200, while being in direct contact with them. However, as described above, the coolant is not limited to being in direct contact with the constituent elements housed in module frame 200. That is, the coolant may also be in indirect contact with the constituent elements housed in the module frame 200. For example, the coolant can cool the constituent elements housed in the module frame 200 while flowing inside the module frame 200 along the coolant flow path formed inside the module frame 200.

The coolant may be a fluid. The coolant needs to be electrically insulated because it may be in direct contact with the battery cell stack 120, the busbar assembly 300 or other electrical components inside the battery module 100. Therefore, the coolant may be an insulating coolant. In one embodiment, the coolant may be an insulating oil. However, the type of the coolant is not limited by those set forth above. For example, the coolant needs to be not ignited even when exposed to a high-temperature environment within the battery module 100, so that the coolant may be a nonflammable coolant.

That is, in the case of the present embodiments, the coolant can make direct contact with the battery cell stack 120, the busbar assembly 300, and other electrical components that generate heat in the battery module 100 and receive transfer of heat, thereby directly cooling them. Therefore, as compared to a conventional battery assembly that indirectly cools the battery module using a heat sink or the like, the battery module 100 according to certain embodiments of the present disclosure can improve the cooling efficiency through direct cooling, thereby extending the lifetime of the battery.

Meanwhile, although not shown in FIG. 4, the battery module 100 may further include a sealing assembly. The sealing assembly may be located on opened both sides of the module frame 200 and formed to cover the battery cell stack 120. That is, the sealing assembly may be disposed between the end plate 400 and the battery cell stack 120 to separate opened both sides of the module frame 200 from the external environment. Specifically, the sealing assembly may perform the role of sealing the coolant so that it does not leak to the outside when the coolant is injected into the inside of the module frame 200.

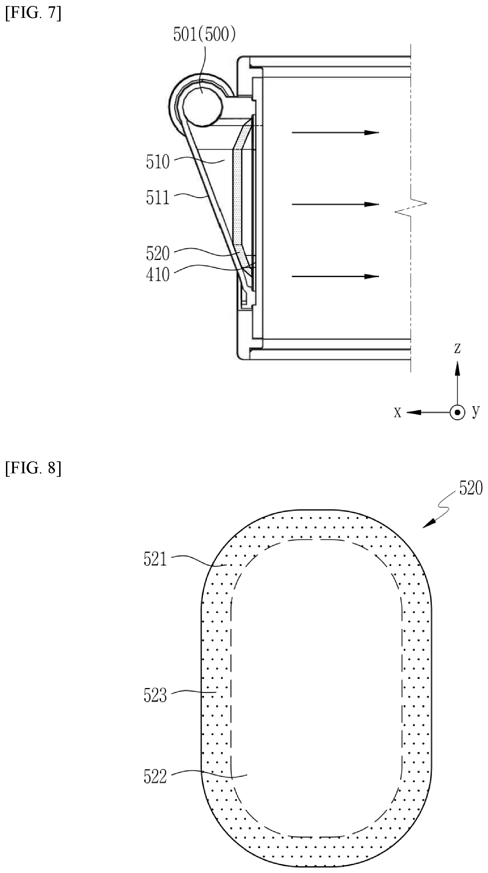

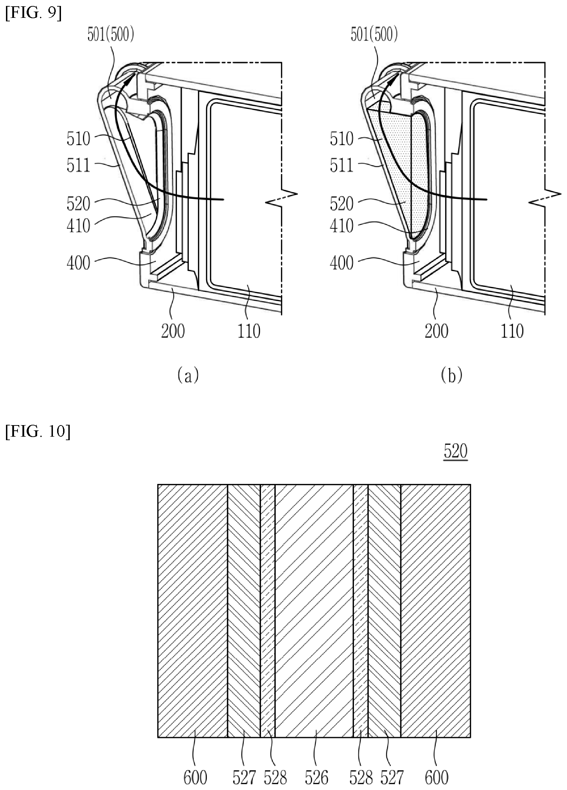

FIG. 6 is a view of the battery module of FIG. 3 as viewed along the -x-axis direction on the yz plane. FIG. 7 is a view of the inlet port as viewed along the -y-axis direction on the xz plane. FIG. 8 is a front view of the expansion member. FIG. 9(a) is a diagram showing the expansion member before being expanded in the inlet port, and FIG. 9(b) is a diagram showing the expansion member after being expanded in the inlet port.

Referring to FIGS. 6 to 9, the battery module 100 includes an inlet port 510 and an outlet port 516 for circulating a coolant inside the module frame 200, and an expansion member 520 disposed inside the inlet port 510 and the outlet port 516, respectively. The inlet port 510 may be formed on an end plate 400 disposed on any one of both surfaces of the module frame 200 so that the coolant may flow into the inside of the module frame 200, and the outlet port 516 may be formed on an end plate 400 disposed on the other of both surfaces of the module frame 200 so that the coolant may flow out from the inside of the module frame 200. Meanwhile, the details of the expansion member 520 will be described later.

The coolant circulates through the coolant line 500 connected to the inlet port 510 and the outlet port 516, respectively. More specifically, the coolant may pass through the heat exchanger 2200 from the coolant reservoir 2100 described later, move through the coolant line 500, then flow into the inside of the module frame 200 through the inlet port 510, flow out to the outside of the module frame 200 through the outlet port 516, and then be collected in the coolant reservoir 2100 through the coolant line 500. Meanwhile, since the outlet port 516 has the same shape and structure as the inlet port 510, illustration of the outlet port 516 is omitted in FIGS. 6 and 7. In the following, the description of the same or corresponding contents as those of the inlet port 510 will be omitted.

The coolant line 500 may include a first coolant line 501 connected to the inlet port 510 and a second coolant line 502 connected to the outlet port 516. The coolant line 500 may be a pipe-like member having rigidity to allow the coolant to flow.

The inlet port 510 may have a shape corresponding to the coolant opening 410 in order to cover the coolant opening 410. As described previously, since the coolant opening 410 is a hole extending in the up-and-down direction, the inlet port 510 may also be configured to extend in the up-and-down direction. Furthermore, the inlet port 510 may include a cover member 511 for covering the coolant opening 410 of the end plate 400. The cover member 511 may be formed to be inclined downward on a surface facing the coolant opening 410. Thereby, the inlet port 510 may decrease in cross-sectional area as it goes from the upper side to the lower side (-z-axis direction) thereof.

Putting together the shape and position in which the above-mentioned coolant opening 410 extends up and down, the coolant opening 410 connected to the inlet port 510 may be located lower than the center on the basis of the height of the battery cell stack 120. That is, the lower end of the coolant opening 410 connected to the inlet port 510 may be located close to the lower edge of the end plate 400. In addition, the upper end of the coolant opening 410 connected to the outlet port 516 may be located higher than the center in the basis of the height of the battery cell stack 120. That is, the upper end of the coolant opening 410 connected to the outlet port 516 may be located close to the upper edge of the end plate 400.

If the lower end of the coolant opening 410 connected to the inlet port 510 is located higher than the center on the basis of the height of the battery cell stack 120, the coolant may flow into the inside of the battery module 100 as if it are falling from a high position, so that bubbles are likely to occur inside the coolant. These bubbles may become a factor that inhibits the cooling effect.

In addition, if the upper end of the coolant opening 410 connected to the outlet port 516 is located lower than the center on the basis of the height of the battery cell stack 120, the coolant flowing into the inside of the battery module 100 is filled only up to the height of the outlet port 516 and flows out to the outside, so that the inside of the battery module 100 may not be filled with a sufficient amount of coolant, which may result in a decrease in cooling performance.

It is preferable that the lower end of the coolant opening 410 connected to the inlet port 510 is located lower than the center on the basis of the height of the battery cell stack 120, and the upper end of the coolant opening 410 connected to the outlet port 516 is located higher than the center on the basis of the height of the battery cell stack 120.

Further, since the coolant opening 410 connected to the inlet port 510 extends in the up-and-down direction, the coolant flowing into the module frame 200 through the inlet port 510 can make overall contact with the battery cell stack 120. Similarly, the coolant making overall contact with the battery cell stack 120 may be flowed out to the outside of the module frame 200 through the outlet port 516. Therefore, since the coolant can flow without a portion stagnating within the module frame 200, the cooling performance can be enhanced.

Further, the coolant flowing in from the first coolant line 501 can flow along the cover member 511 inclined between the first coolant line 501 and the coolant opening 410. Therefore, since the coolant can flow into the inside of the battery module 100 without abrupt changes in the flowing direction, it is possible to reduce the possibility of occurrence of bubbles inside the coolant.

Further, since the inlet port 510 increases in its cross-sectional area as it goes from the first coolant line 501 toward the coolant opening 410, the flow rate of the coolant flowing in from the first coolant line 501 decreases inside the inlet port 510. Therefore, since the flow rate of the coolant is reduced in advance before the coolant flows into the inside of the module frame 200 and comes into contact with the battery cell stack 120, abrupt changes in flow rate inside the module frame 200 can be reduced. Thereby, the possibility of occurrence of bubbles inside the coolant due to abrupt changes in flow rate can be reduced, and the time for the coolant to be in contact with the battery cell stack 120 can be increased, so that the cooling performance can be improved.

The expansion member 520 is a member whose volume expands when it reaches a prescribed temperature. If a thermal runaway phenomenon occurs in the battery cells 110, high-temperature vent gas may be generated inside the battery module 100, and at the same time, the temperature of the coolant inside the battery module 100 may also increase. When the expansion member 520 reaches a prescribed temperature, it may expand in volume so as to close the coolant opening 410. More specifically, as shown in FIG. 9(a), the expansion member 520 may be disposed inside the inlet port 510 and the outlet port 516, respectively. If the expansion member 520 reaches a prescribed temperature, as shown in FIG. 9(b), the expansion member 520 may expand in volume toward the internal space of the inlet port 510 and the outlet port 516 to close the coolant opening 410.

Referring again to FIGS. 7 and 8, the expansion member 520 may include a main body part 521 formed to surround the periphery of the coolant opening 410 and a through hole 522 formed to allow the coolant to flow in or out. In a common environment, the coolant may flow into the inside of the module frame 200 or flow out from the module frame 200 through the through hole 522 of the expansion member 520.

When the expansion member 520 is disposed inside the inlet port 510 and the outlet port 516, respectively, the main body part 521 may be formed to be inclined so that its cross-sectional area decreases as going away from the coolant opening 410. As shown in FIG. 7, since the main body part 521 of the expansion member 520 is formed to be inclined in a state of protruding from the coolant opening 410, the volume may expand toward the cover member 511 of the inlet port 510 and the outlet port 516 when the expansion member 520 comes into contact with the high-temperature coolant and/or vent gas generated inside the battery module 100. That is, since the expansion direction of the expansion member 520 is guided, the inlet port 510 and the outlet port 516 can be effectively closed.

Further, the main body part 521 may include a plurality of micro holes 523 formed to allow the coolant to penetrate into the expansion member 520. Since the high-temperature coolant and/or vent gas penetrate into the micro holes 523 of the plurality of micro holes 523, the high-temperature coolant and/or vent gas can easily penetrate into the foamed layer 526 of the expansion member 520, which will be described later. As a result, volume expansion does not occur only in a specific portion of the expansion member 520, but can occur smoothly throughout the entire expansion member 520. Meanwhile, the number of micro holes 523 formed per area of the main body part 521 can be changed and modified in various ways as needed.

FIG. 10 is a cross-sectional view of the expansion member.

Referring to FIG. 10, the expansion member 520 includes a foamed layer 526 that is foamed and expanded in volume when a prescribed temperature is reached, a chemical resistant layer 527 that is laminated on both surfaces of the foamed layer 526, and an adhesive layer 528 that is applied between the foamed layer 526 and the chemical resistant layer 527 to adhere the chemical resistant layer 527 to the foamed layer 526.

The foamed layer 526 may be formed of a material that is foamed and expanded in volume when it comes into contact with a high-temperature coolant and/or vent gas. For example, the foamed layer 526 may include materials corresponding to foamed polymers, and for example, it may include at least one of a silica gel, a foamed silicone pad, a polyurethane foam, and a polypropylene.

As shown in FIG. 10, the chemical resistant layer 527 prevents the foamed layer 526 from coming into contact with the coolant 600 under a common operating environment. Thereby, the foamed layer 526 can be prevented from absorbing the coolant 600 and can prevent a chemical reaction with the coolant 600. For example, the chemical resistant layer 527 may include at least one of PVC, PET, Nylon, PFA, PVDF, and PTFE.

Meanwhile, the materials of the foamed layer 526 and the chemical resistant layer 527 are not limited to those set forth above, and may include a variety of foaming materials having high temperature durability and chemical resistance.

The foamed layer 526 may be foamed and expanded in volume when it reaches the first temperature. The chemical resistant layer 527 may be softened at a second temperature lower than the first temperature at which the foamed layer 526 is foamed. Furthermore, the chemical resistant layer 527 may be thermally decomposed at a third temperature higher than the second temperature. That is, the chemical resistant layer 527 may be softened at the second temperature before the foamed layer 526 reaches the first temperature at which it is foamed, and may be thermally decomposed and removed at a third temperature higher than the second temperature. Since the chemical resistant layer 527 is softened before reaching the first temperature, it may be thermally decomposed and removed immediately when it reaches the third temperature. Thereby, the foamed layer 526 is prevented from coming into contact with the high-temperature coolant and/or vent gas by the chemical resistant layer 527, and can be foamed by being in contact with the high-temperature coolant and/or vent gas after the chemical resistant layer 527 is removed.

At this time, the third temperature at which the chemical resistant layer 527 is thermally decomposed may be higher than or equal to the first temperature at which the foamed layer 526 is foamed. Since the chemical resistant layer 527 is thermally decomposed at a temperature higher than or equal to the temperature at which the foamed layer 526 is foamed, the foamed layer 526 can be prevented from being foamed through a chemical reaction with the coolant until reaching the temperature at which the foamed layer 526 is foamed.

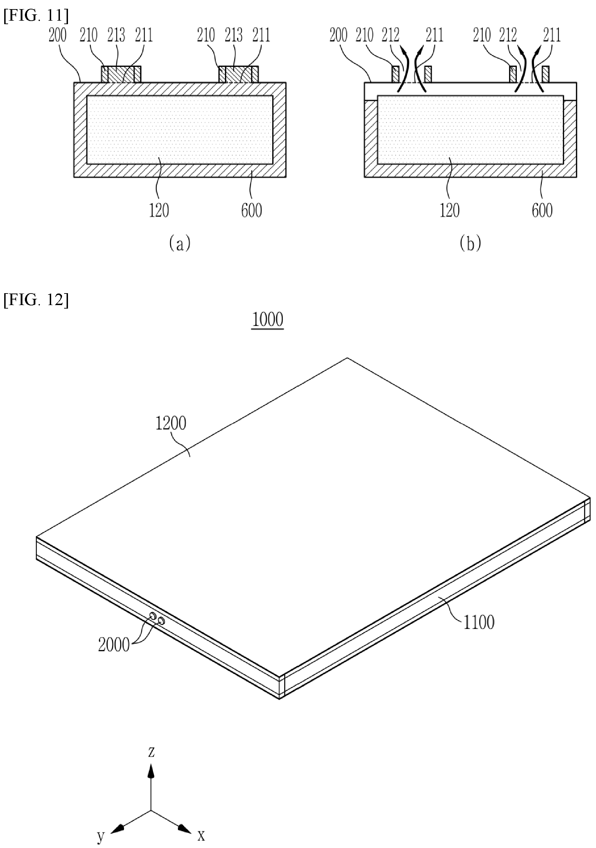

FIG. 11 is a conceptual diagram for explaining the operation of the venting part.

Referring again to FIGS. 3 and 11, the module frame 200 may include at least one venting part 210 formed at the upper end to discharge internal gas.

The venting part 210 may include a venting hole 211 that is able to be opened so as to discharge internal gas, and an opening 212 that closes the venting hole 211 when the pressure or temperature inside the module frame 200 is less than a prescribed internal pressure or a prescribed internal temperature, and opens the venting hole 211 when the pressure or temperature inside the module frame 200 reaches a prescribed internal pressure or a prescribed internal temperature. For example, the opening 212 may include a rupture member 213 that is located to correspond to the venting part 210 and ruptures when a prescribed internal pressure is reached or decomposes when a prescribed internal temperature is reached. FIG. 11(a) shows the form where the opening 212 is filled with a rupture member 213, and FIG. 11(b) shows the form where the rupture member 213 is removed and the opening 212 is opened. However, the rupture member 213 is not particularly limited in the shape as long as it can close the opening 212 in normal times and is removed when a prescribed internal pressure or a prescribed internal temperature is reached, thereby inducing the discharge of internal gas. In addition, the pressure at which the rupture member 213 ruptures or the temperature at which it decomposes can be changed and modified in various ways depending on the type of the coolant.

In the common operating state of the battery module 100, the opening 212 is formed outside the venting hole 211, so the venting hole 211 is closed by the rupture member 213. When a thermal runaway phenomenon occurs in battery cells 110 and gas is generated inside the battery module 100, the pressure inside the battery module 100 increases and the rupture member 213 ruptures, so that the venting hole 211 is exposed to the outside. Thereby, the gas inside the battery module 100 can be discharged to the outside.

In particular, according to certain embodiments of the present disclosure, when a thermal runaway phenomenon occurs in the battery module 100, the inlet port 510 and the outlet port 516 are closed by the expansion member 520, so that a certain level or more of coolant 600 may remain inside the battery module 100. At this time, the coolant 600 remaining inside the battery module 100 can receive and vaporize energy generated inside the battery module 100, thereby cooling the inside of the battery module 100. However, since the inlet port 510 and outlet port 516 of the battery module 100 are closed and the internal coolant 600 is vaporized, the internal pressure of the battery module 100 may increase. Therefore, when the internal pressure of the battery module 100 reaches a prescribed pressure, the battery module 100 may be opened to the outside by the venting part 210, through which the pressure inside the battery module 100 may be reduced. If the pressure inside the battery module 100 is not relieved by the venting part 210, leakage of a coolant may occur in the module frame 200 and end plate 400 of the battery module 100, which may cause a problem of not receiving the cooling effect due to the coolant inside the battery module 100.

Therefore, when gas is generated inside the battery module 100 due to thermal runaway of the battery cells 110 and the internal pressure increases above a prescribed range, the venting part 210 can perform the role of discharging the gas inside the battery module 100. Thereby, even while preventing a situation in which the stability is lowered, such as the internal configuration of the battery module 100 is being exposed to the outside, it is possible to improve the stability of the battery module 100 and secure the perfect performance of the battery module 100. In addition, when the thermal runaway phenomenon occurs, the cooling effect due to the coolant 600 can be maintained for a longer period of time, thereby further improving the stability of the battery module 100.

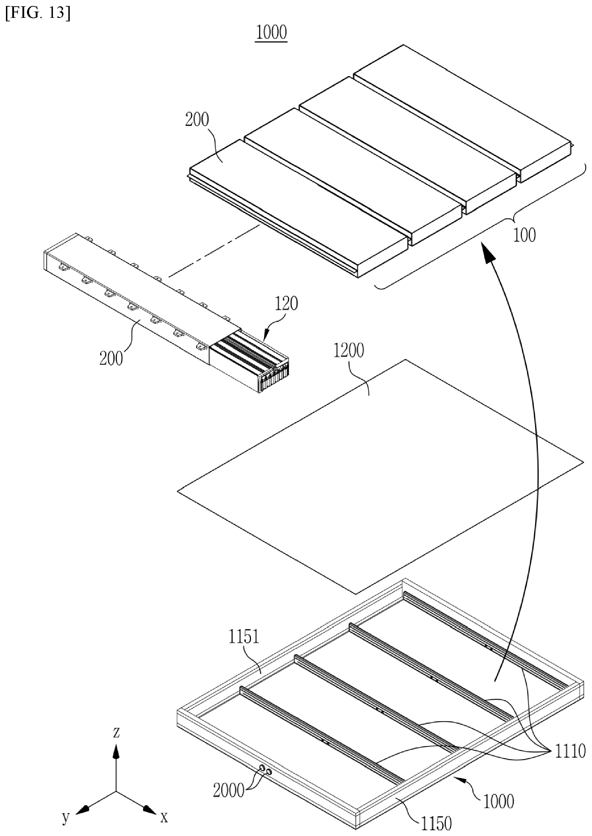

FIG. 12 is a perspective view of a battery pack including a battery module according to certain embodiments of the present disclosure. FIG. 13 is an exploded perspective view of the battery pack shown in FIG. 12.

Referring to FIGS. 12 and 13, the battery pack 1000 includes a lower pack frame 1100 on which a plurality of battery modules 100 are mounted and an upper pack frame 1200 located on an upper part of the battery modules 100. Here, the lower pack frame 1100 and the upper pack frame 1200 can be coupled to each other by a method such as welding to seal the inside of the battery pack 1000. In addition, a plurality of battery modules 100 may be mounted together with various control and protection systems such as a BMS (Battery Management System) and a BDU (Battery Disconnect Unit) to form a battery pack 1000.

The lower pack frame 1100 includes a side pack frame 1150 and at least two internal beams 1110 formed on the bottom surface of the lower pack frame 1100. Here, the bottom surface of the lower pack frame 1100 and the at least two internal beams 1110, and the bottom surface of the lower pack frame 1100 and the side pack frame 1150 may be coupled to each other by a method such as welding.

The plurality of battery modules 100 may be mounted in an area partitioned from each other by the side pack frame 1150 and at least two internal beams 1110. In other words, the plurality of battery modules 100 may be respectively disposed in an area between the side pack frame 1150 and the internal beams 1110, and an area located between adjacent internal beams 1110 to each other. More specifically, in the battery pack 1000, the battery module 100 may be disposed between a pair of internal beams 1110 located adjacent to each other among the plurality of internal beams 1110 and the side pack frame 1150.

Therefore, the plurality of battery modules 100 are surrounded by at least two internal beams 1110 and the side pack frame 1150, so that each battery module 100 can be protected from external impact.

The side pack frame 1150 may be disposed on the edge of the bottom surface of the lower pack frame 1100, and may extend upward (in the z-axis direction) from the bottom surface of the lower pack frame 1100. More specifically, it may extend upward from each edge of the bottom surface of the lower pack frame 1100. Here, the upper end of the side pack frame 1150 may make contact with the upper pack frame 1200. At this time, the upper end of the side pack frame 1150 and the upper pack frame 1200 may be coupled to each other by a method such as welding, thereby sealing the inside of the battery pack 1000.

The plurality of internal beams 1110 may be spaced apart from each other. Here, the distance at which the adjacent internal beams 1110 are spaced apart from each other may be equal to or greater than the size of the battery module 100.

Further, the end of the internal beam 1110 may make contact with the inner surface 1151 of the side pack frame 1150. More specifically, both ends of the internal beam 1110 may make contact with the inner surface 1151 of the side pack frame 1150, respectively.

When a plurality of battery modules 100 are mounted on the lower pack frame 1100, each of the plurality of battery modules 100 may be connected to a coolant line 500. Specifically, the first coolant line 501 may be connected to an inlet port 510 of each of the plurality of battery modules 100, and the second coolant line 502 may be connected to an outlet port 516 of each of the plurality of battery modules 100.

In this case, the coolant line 500 connecting the plurality of battery modules 100 may extend through the upper part of the internal beam 1110. In another embodiment, the coolant line 500 connecting the plurality of battery modules 100 may extend through the internal beam 1110. However, the connection structure of the coolant line 500 connecting the plurality of battery modules 100 is not limited to those set forth above, and may be variously changed and modified in accordance with the arrangement of various components such as the plurality of battery modules 100 and the BMS (Battery Management System), BDU (Battery Disconnect Unit) disposed inside the battery pack 1000.

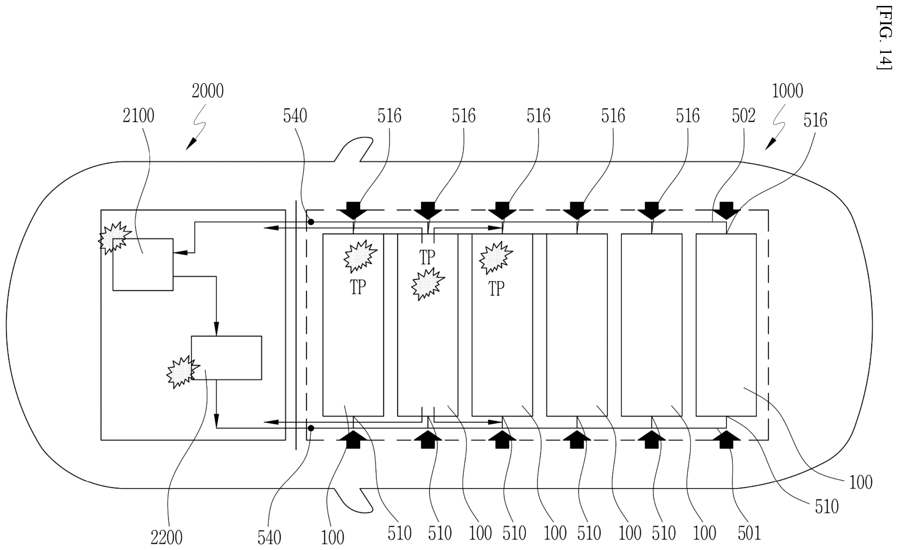

FIG. 14 is a conceptual diagram for explaining the positions at which the expansion member is disposed in the battery pack.

Referring to FIG. 14, the battery pack 1000 may be connected to an external device 2000 including a coolant reservoir 2100, a heat exchanger 2200, and the like. In FIG. 14, only constituent elements for circulating the coolant are shown for convenience of explanation, but various constituent elements may be included depending on the device in which the battery pack 1000 is mounted.

The coolant stored in the coolant reservoir 2100 passes through the heat exchanger 2200 and then circulates along the coolant line 500 of the battery pack 1000. Specifically, the coolant having passed through the heat exchanger 2200 can be flowed into the inlet port 510 of each of the plurality of battery modules 100 via the first coolant line 501. The coolant having flowed into the battery modules 100 can cool the battery modules 100 and then flow out to the second coolant line 502 through the outlet port 516 of each of the plurality of battery modules 100. The coolant having flowed out to the second coolant line 502 can flow again into the coolant reservoir 2100.

As shown in FIG. 14, the expansion member 520 may be disposed in the inlet port 510 of each of the plurality of battery modules 100 and the outlet port 516 of each of the plurality of battery modules 100. The expansion member 520 disposed in each of the inlet port 510 and the outlet port 516 of the plurality of battery modules 100 may close the inlet port 510 and the outlet port 516 when a prescribed temperature is reached, thereby blocking high-temperature coolant and/or vent gas from flowing into the coolant line 500.

Therefore, even if a thermal runaway phenomenon occurs in any one of the plurality of battery modules 100, the expansion member 520 disposed in the battery module 100 where the thermal runaway phenomenon has occurred can prevent the vent gas generated in the battery module 100 from being discharged into the coolant line 500. As a result, it is possible to prevent the vent gas generated in any one of the plurality of battery modules 100 from propagating along the coolant line 500 to an adjacent battery module 100 and/or an external device 2000.

Meanwhile, the battery module 100 and the battery pack 1000 including the same according to certain embodiments of the present disclosure can be applied to various external devices 2000. In certain embodiments shown in FIG. 14, an electric vehicle and a hybrid vehicle are shown as examples of such devices, but are not limited thereto. That is, the present disclosure can be applied to various devices that can use the battery module and the battery pack including the same. For example, it can be applied even to transportation vehicles such as an electric bicycle and/or an energy storage system (ESS), which also fall within the scope of the present disclosure.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery module
110: battery cell
120: battery cell stack
200: module frame
210: venting part
211: venting hole
212: opening
213: rupture member
300: busbar assembly
310: busbar frame
320: busbar
400: end plate
410: coolant opening
500: coolant line
506: connecting member
510: inlet port
511: cover member
516: outlet port
520: expansion member
521: main body part
522: through hole
523: micro hole
526: foamed layer
527: chemical resistant layer
528: adhesive layer
1000: battery pack
1100: lower pack frame
1110: internal beam
1150: side pack frame
1200: upper pack frame
2000: external device
2100: coolant reservoir
2200: heat exchanger

## Claims

1. A battery module comprising:
a battery cell stack in which a plurality of battery cells are stacked;
a module frame that houses the battery cell stack;
an inlet port through which a coolant flows into the module frame;
an outlet port through which the coolant flows out of the module frame; and
an expansion member which is disposed respectively within the inlet port and the outlet port and expands in its volume when a prescribed temperature is reached.

2. The battery module according to claim 1,
further comprising an end plate that closes opened both sides of the module frame, and includes a coolant opening formed to allow the coolant to flow in or out,
wherein the expansion member expands so as to close the coolant opening when the prescribed temperature is reached.

3. The battery module according to claim 2,
wherein the inlet port is formed in the end plate disposed on any one of both surfaces of the module frame, and
the outlet port is formed in the end plate disposed on the other of both surfaces of the module frame.

4. The battery module according to claim 2,
wherein an upper end of the coolant opening is located higher than a center on the basis of a height of the battery cell stack, and
a lower end of the coolant opening is located lower than the center on the basis of the height of the battery cell stack.

5. The battery module according to claim 4,
wherein a length from the upper end to the lower end of the coolant opening is between 0.5 and 0.9 times a length from an upper edge to a lower edge of the end plate.

6. The battery module according to claim 4,
wherein the expansion member comprises,
a main body part formed to surround a periphery of the coolant opening; and
a through hole formed to allow the coolant to flow in or out.

7. The battery module according to claim 6,
wherein the main body part is formed to be inclined so that its cross-sectional area decreases as going away from the coolant opening.

8. The battery module according to claim 6,
wherein the main body part comprises a plurality of micro holes formed to allow the coolant to penetrate into the expansion member.

9. The battery module according to claim 2,
wherein each of the inlet port and the outlet port comprises a cover member formed to be inclined downward on a surface facing the coolant opening, and
the inlet port and the outlet port decrease in cross-sectional area as they go from the upper side to the lower side.

10. The battery module according to claim 9,
wherein the expansion member expands toward an internal space of the inlet port and the outlet port during expansion to close the coolant opening.

11. The battery module according to claim 1,
wherein the expansion member comprises,
a foamed layer that expands in volume when it reaches a first temperature; and
a chemical resistant layer that is laminated on both surfaces of the foamed layer and softened at a second temperature lower than the first temperature.

12. The battery module according to claim 11,
wherein the chemical resistant layer thermally decomposes at a third temperature higher than the second temperature.

13. The battery module according to claim 12,
wherein the third temperature is higher than or equal to the first temperature.

14. The battery module according to claim 11,
wherein the foamed layer comprises at least one of a silica gel, a foamed silicone pad, a polyurethane foam, and a polypropylene.

15. The battery module according to claim 1,
wherein the chemical resistant layer comprises at least one of PVC, PET, Nylon, PFA, PVDF and PTFE.

16. The battery module according to claim 1,
wherein the module frame comprises at least one venting part formed at an upper end thereof to discharge internal gas.

17. The battery module according to claim 16,
wherein the venting part comprises,
a venting hole which is able to be opened so as to discharge internal gas; and
an opening that closes the venting hole when a pressure or temperature inside the module frame is below a prescribed internal pressure or a prescribed internal temperature, and opens the venting hole when the pressure or temperature inside the module frame reaches the prescribed internal pressure or the prescribed internal temperature.

18. The battery module according to claim 17,
wherein the opening comprises a rupture member that ruptures when the prescribed internal pressure is reached or thermally decomposes when the prescribed internal temperature is reached.

19. The battery module according to claim 1,
wherein the coolant comprises an insulating coolant or a nonflammable coolant.

20. A battery pack comprising a plurality of battery modules according to claim 1,
wherein the battery pack comprises a coolant line connected to the inlet port and the outlet port, respectively, and
the expansion member closes the inlet port and the outlet port when a prescribed temperature is reached, thereby blocking the coolant from flowing into the coolant line.
